# EUROPÄISCHE PATENTANMELDUNG

(11) **EP 1 480 097 A2**
(43) Veröffentlichungstag der Anmeldung: **24.11.2004**
(21) Anmeldenummer: 04009918.6
(22) Anmeldetag: 27.04.2004
(51) Int. Cl.: G05D 1/02, B62D 1/28

(54) **Automatisierter Speditionshof**

(30) Priorität: 19.05.2003 DE 10322765
(71) Anmelder: DaimlerChrysler AG, 70567 Stuttgart (DE)
(72) Erfinder: Mayer, Christian, 72762 Reutlingen (DE); Schwarzhaupt, Andreas, 74420 Oberrot (DE); Spiegelberg, Gernot, 71296 Heimsheim (DE)

(57) **Zusammenfassung**

Die vorliegende Erfindung betrifft einen automatisierten Speditionshof (1) für autonom fahrbare Verkehrsmittel (10),
- mit einer Abgabestation (3), die zur Übergabe eines von einem Fahrzeugführer manuell zur Abgabestation (3) überführten Verkehrsmittels (10) an den Speditionshof (1) dient und bei der Fahrzeugdaten an einen Kontrollrechner (39) des Speditionshofs (1) übermittelt werden,
- mit einer Entladestation (4) zum Entladen des dahin überführten Verkehrsmittels (10) in Abhängigkeit der Fahrzeugdaten,
- mit einer Wartungsstation (5) zur Wartung des dahin überführten Verkehrsmittels (10) in Abhängigkeit der Fahrzeugdaten,
- mit einer Beladestation (6) zum Beladen des dahin überführten Verkehrsmittels (10) in Abhängigkeit der Fahrzeugdaten, und
- mit einer Abholstation (7), die zur Übergabe des dahin überführten Verkehrsmittels (10) an den Fahrzeugführer in Abhängigkeit der Fahrzeugdaten dient.

## Beschreibung

Die vorliegende Erfindung betrifft einen automatisierten Speditionshof, Betriebshof oder ein Logistikzentrum für autonom fahrbare Lastkraftwagen.

In einem Speditionshof werden täglich mehrere Lastkraftwagen be- und entladen. Des Weiteren kann ein solcher Speditionshof mit einer Werkstatt sowie mit einer Tankstelle ausgestattet sein, um die Lastkraftwagen betanken und warten zu können; gegebenenfalls können auch Reparaturen durchgeführt werden. Üblicherweise verfügt ein solcher Speditionshof nur über ein begrenztes Gelände, so dass die Lastkraftwagen auf dem Speditionshof permanent rangiert werden müssen, was zum einen zeitaufwändig ist und zum anderen stets eine Gefahr darstellt. Insbesondere ist für das Rangieren, vor allem für das Rückwärtsfahren des Lastkraftwagens, ein Einweiser erforderlich, um die Kollisionsgefahr zwischen dem Lastkraftwagen und einem Hindernis zu reduzieren. Des Weiteren ist der Personalbedarf zum Bewegen der Lastkraftwagen innerhalb des Speditionshofs vergleichsweise groß, wobei auch die Einweiser ins Gewicht fallen. Es besteht daher das Bedürfnis, den Betrieb eines Speditionshofs so weit zu vereinfachen, dass dies insbesondere mit einem reduzierten Personalaufwand realisierbar ist.

Aus der EP 0 971 276 A1 ist ein autonom fahrbarer Rasenmäher bekannt, der mit einer Positionsbestimmungseinrichtung, z. B. ein GPS-Empfänger, ausgestattet ist. Eine Steuereinrichtung des Rasenmähers umfasst einen Lern-Modus, in dem der Rasenmäher manuell betrieben wird. Der Rasenmäher merkt sich dabei den zurückgelegten Weg. In einem Selbstfahr-Modus kann dann der Rasenmäher den zuvor erlernten Weg selbstständig, also autonom, nachfahren.

Aus der EP 0 423 332 B1 ist ein autonom fahrbares Fahrzeug bekannt, das gespeicherte Sollkurse nachfahren kann. Dazu ist das Fahrzeug mit einer Positionserfassungseinrichtung ausgestattet, welche die momentane Fahrzeugposition anhand von Zeitdifferenzen ermitteln kann, die durch unterschiedliche Laufzeiten von Signalen entstehen, die über örtlich verteilte Sendestationen synchron abgesandt werden.

Die EP 0 297 811 A2 stellt ein unbemanntes Fahrzeug vor, das autonom einem gespeicherten Weg in einer Fabrik folgen kann. Dabei orientiert sich das Fahrzeug an physikalischen Merkmalen, welche die seitliche Umgebung des abzufahrenden Wegs charakterisieren.

Aus der DE 100 32 179 A1 ist ein Steuerungssystem für ein Fahrzeug bekannt, das mit einem elektronisch ansteuerbaren Antriebsstrang ausgestattet ist. Das Steuerungssystem umfasst eine fahrzeugfeste Bedieneinrichtung, in die ein Fahrzeugführer einen Fahrwunsch (z. B. Beschleunigen, Lenken) in das Lenkungssystem eingeben kann und die den Fahrwunsch in einen Bewegungsvektor transformiert. Dieser Bewegungsvektor wird einer Steuereinrichtung übermittelt, die daraus Steuersignale generiert und diese an den Antriebsstrang übermittelt. Der Antriebsstrang kann nun die Steuersignale zur Umsetzung des Fahrwunsches abarbeiten. Ein derartiges Steuerungssystem kann auch als Drive-by-Wire-System oder als X-by-Wire-System bezeichnet werden, bei dem die einzelnen Komponenten des Antriebsstrangs, wie z. B. Lenkungsanlage, Bremsanlage und Antriebsaggregat, elektronisch gesteuert werden, ohne dass zwischen entsprechenden Bedienelementen, wie z. B. Lenkrad, Joystick, Gaspedal oder Bremspedal, eine durchgehende mechanische oder hydraulische Verbindung zur jeweiligen Komponente des Antriebsstrangs besteht.

Die vorliegende Erfindung beschäftigt sich mit dem Problem, für einen Speditionshof, einen Betriebshof oder ein Logistikzentrum eine verbesserte Ausführungsform anzugeben, die insbesondere mit einem reduzierten Personalaufwand auskommt. Des Weiteren soll die Betriebssicherheit des Speditionshofs vergrößert werden.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Speditionshof auf die Abfertigung von autonom fahrbaren Lastkraftwagen oder auch Omnibusse auszulegen und mit unterschiedlichen Stationen auszustatten, die von den Lastkraftwagen innerhalb des Speditionshofs autonom angefahren werden können. Unter einem "autonomen" Fahrbetrieb wird im vorliegenden Zusammenhang ein Fahrbetrieb verstanden, bei dem im Lastkraftwagen kein Fahrzeugführer anwesend sein muss. Die für den manuellen Betrieb des Lastkraftwagens im Cockpit vorhandenen Bedienelemente, wie z. B. Lenkrad, Gaspedal, Bremspedal oder Gangschaltung, werden beim autonomen Fahrbetrieb nicht betätigt. Beim erfindungsgemäßen Speditionshof übergibt der Fahrzeugführer seinen Lastkraftwagen an einer Abgabestation an den Speditionshof. Ab hier wird der Lastkraftwagen nur noch autonom von Station zu Station bewegt. Dabei ist klar, dass der Lastkraftwagen innerhalb der einzelnen Stationen durchaus auch noch manuell betrieben werden kann. Nachdem der Lastkraftwagen eine Entladestation, eine Wartungsstation und eine Beladestation durchlaufen hat, wird er in einer Ausgabestation für die nächste Fahrt bereitgestellt, wo er vom gleichen oder von einem anderen Fahrzeugführer wieder übernommen werden kann. Durch die Verwendung autonom fahrbarer Lastkraftwagen sind innerhalb des Speditionshofs keine Fahrzeugführer erforderlich, um die Lastkraftwagen von der einen Station zur nächsten manuell zu überführen. Insoweit kann Personal eingespart werden. Des Weiteren kann der autonome Fahrbetrieb ohne Weiteres so ausgestaltet werden, dass die Überführung des Lastkraftwagens von einer Station zur nächsten im Wesentlichen selbstständig abläuft, so dass Personal nur noch zur Kontrolle des ordnungsgemäßen Ablaufs erforderlich ist.

Gemäß vorteilhafter Ausführungsformen kann der Speditionshof außerdem mit einer automatischen Tankstation und/oder mit einer automatischen Waschstation ausgestattet sein, um den jeweiligen Lastkraftwagen erforderlichenfalls zu betanken bzw. zu waschen.

Entsprechend einer besonders vorteilhaften Ausführungsform ist ein für den erfindungsgemäßen Speditionshof geeigneter Lastkraftwagen, also ein autonom fahrbarer Lastkraftwagen, mit einem elektronisch ansteuerbaren Antriebsstrang sowie mit einem Steuerungssystem ausgestattet, das nach dem Drive-by-Wire-Prinzip oder nach dem X-by-Wire-Prinzip arbeitet und beispielsweise in der weiter oben genannten DE 100 321 79A1 beschrieben ist, deren Inhalt hiermit durch ausdrückliche Bezugnahme zum Offenbarungsgehalt der vorliegenden Erfindung hinzugefügt wird. Das an sich bekannte Steuerungssystem umfasst eine fahrzeugfeste manuelle Bedieneinrichtung und wird erfindungsgemäß durch wenigstens eine autonome Bedieneinrichtung ergänzt, über die für den autonomen Fahrzeugbetrieb ein Fahrwunsch eingebbar ist und die aus dem Fahrwunsch einen standardisierten Bewegungsvektor generiert, der von der Steuereinrichtung des Antriebsstrangs verarbeitet werden kann. Um dies zu ermöglichen, ist das Steuerungssystem außerdem mit einer Antriebsstrang-Schnittstelle ausgestattet, über welche sowohl die ohnehin vorhandene manuelle Bedieneinrichtung als auch die wenigstens eine zusätzliche autonome Bedieneinrichtung mit der Steuereinrichtung gekoppelt sind. Die vorliegende Erfindung nutzt somit die Erkenntnis, dass sich Lastkraftwagen, die einen elektronisch ansteuerbaren Antriebsstrang aufweisen, in besonderer Weise für eine Verwendung in einem autonomen Betriebsmodus eignen, da es lediglich erforderlich ist, mittels einer geeigneten autonomen Bedieneinrichtung im Wesentlichen denselben standardisierten Bewegungsvektor zu generieren, der auch mit der fahrzeugseitigen Bedieneinrichtung vom Fahrzeugführer im manuellen Betrieb generiert wird. Dieser von der autonomen Bedieneinrichtung erzeugte Bewegungsvektor muss dann nur noch auf geeignete Weise der Steuereinrichtung des Steuerungssystems zugeführt werden, die diesen dann in der gleichen Weise wie einen von der manuellen Bedieneinrichtung erzeugten Bewegungsvektor zur Abarbeitung an den Antriebsstrang weiterleitet. Auf zusätzliche Stellglieder zur Betätigung der fahrzeugseitigen Bedienelemente kann dabei verzichtet werden. Der Aufwand zur Realisierung derartiger autonomer Bedieneinrichtungen ist demnach vergleichsweise gering, da lediglich eine geeignete Schnittstelle, nämlich die Antriebsstrang-Schnittstelle, geschaffen werden muss.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine Draufsicht auf einen erfindungsgemäßen Speditionshof in einer stark vereinfachten Prinzipdarstellung,
- Fig. 2: eine schaltplanartige Prinzipdarstellung eines Steuerungssystems eines für den Speditionshof geeigneten Lastkraftwagens.

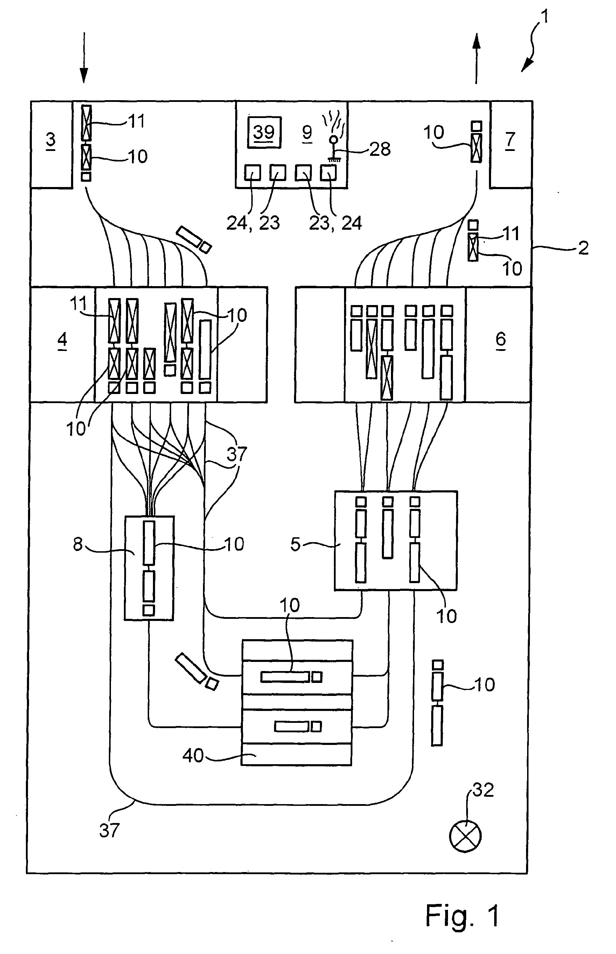

Entsprechend Fig. 1 besitzt ein erfindungsgemäßer Speditionshof 1 ein Gelände 2, das zweckmäßig nach außen abgesperrt ist. Auf diesem Gelände 2 umfasst der Speditionshof 1 zumindest eine Abgabestation 3, zumindest eine Entladestation 4, zumindest eine Wartungsstation 5, zumindest eine Beladestation 6 und wenigstens eine Abholstation 7. Die hier gezeigte spezielle Ausführungsform umfasst außerdem eine Tankstation 40 und eine Waschstation 8. Des Weiteren ist eine Fernbedienzentrale 9 vorgesehen. Der Speditionshof 1 ist automatisiert und für eine Verwendung mit autonom fahrbaren Lastkraftwagen 10 vorgesehen. Bei den Lastkraftwagen 10 kann es sich um eingliedrige Lastkraftwagen 10 ohne Anhänger oder um Gespanne 10 aus Zugmaschine und Anhänger, insbesondere um Aufliegerfahrzeuge 10, handeln. In der Darstellung gemäß Fig. 1 sind diejenigen Lastkraftwagen 10, die mit einer Nutzlast 11 beladen sind, durch ein X gekennzeichnet, während die unbeladenen Lastkraftwagen 10 ohne ein solches X dargestellt sind.

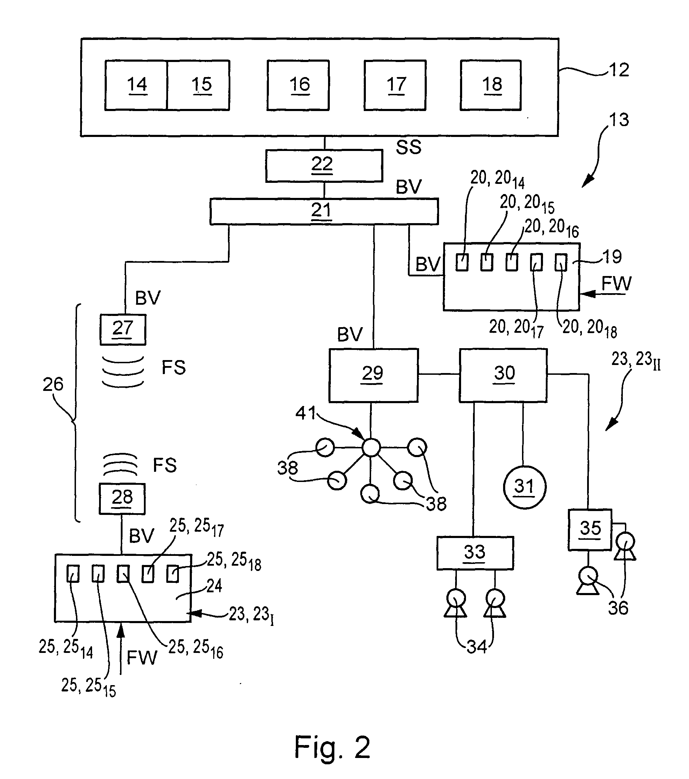

Die Lastkraftwagen 10, die im erfindungsgemäßen Speditionshof 1 abgefertigt werden können, sind als autonom fahrbare Lastkraftwagen 10 ausgestaltet. Entsprechend Fig. 2 sind derartige Lastkraftwagen 10 vorzugsweise mit einem Steuerungssystem 13 ausgestattet, das einen elektronisch ansteuerbaren Antriebsstrang 12 umfasst. Dieser Antriebsstrang 12 besitzt beispielsweise ein Antriebsaggregat 14, ein damit gekoppeltes Getriebe 15, eine Lenkungsanlage 16, eine Bremsanlage 17 und hier exemplarisch noch eine Niveauregulierungseinrichtung 18.

Das Steuerungssystem 13 umfasst eine fest im jeweiligen Lastkraftwagen 10 installierte manuelle Bedieneinrichtung 19, die Bedienelemente 20 aufweist. Die Bedienelemente 20 sind von einem Fahrzeugführer manuell betätigbar und sind den einzelnen Komponenten 14 bis 18 des Antriebsstrangs 12 zugeordnet. Im Einzelnen handelt es sich bei den Bedienelementen 20 um ein Gaspedal 20₁₄, um eine Gangschaltung 20₁₅, um ein Lenkrad oder um einen Joystick 20₁₆, um ein Bremspedal 20₁₇ und um ein Regulierelement 20₁₈ zur Betätigung der Niveauregulierungseinrichtung 18. Der Fahrzeugführer kann über die manuelle Bedieneinrichtung 19 einen durch einen Pfeil symbolisierten Fahrwunsch FW in das Steuerungssystem 13 eingeben. Die manuelle Bedieneinrichtung 19 generiert aus dem eingangsseitigen Fahrwunsch FW an ihrer Ausgangsseite einen Bewegungsvektor BV und ist ausgangsseitig an eine Antriebsstrang-Schnittstelle 21 angeschlossen. An diese Antriebsstrang-Schnittstelle 21 ist außerdem eine Steuereinrichtung 22 des Steuerungssystems 13 angeschlossen. Diese Steuereinrichtung 22 kann aus dem eingehenden Bewegungsvektor BV ausgehende Steuersignale SS generieren und diese dem Antriebsstrang 12 bzw. dessen Komponenten 14 bis 18 zuführen. Der Antriebsstrang 12 bzw. seine Komponenten 14 bis 18 können nun die Steuersignale SS abarbeiten, wodurch der ursprüngliche Fahrwunsch FW umgesetzt wird.

Erfindungsgemäß ist dieses Steuerungssystem 13 um wenigstens eine autonome Bedieneinrichtung 23 erweitert. Bei der hier gezeigten Ausführungsform sind exemplarisch zwei derartige autonome Bedieneinrichtungen 23 vorgesehen, nämlich eine erste autonome Bedieneinrichtung 23_{I} sowie eine zweite autonome Bedieneinrichtung 23_{II}. Ebenso können weitere autonome Bedieneinrichtungen 23 vorgesehen sein.

Jede autonome Bedieneinrichtung 23 ist an die Antriebsstrang-Schnittstelle 21 angeschlossen und ist außerdem so ausgestaltet, dass über sie für den autonomen Betrieb des Lastkraftwagens 10 Fahrwünsche FW eingebbar sind, wobei auch die autonome Bedieneinrichtung 23 aus den Fahrwünschen FW Bewegungsvektoren BV generiert. Die Bewegungsvektoren BV sind zu diesem Zweck standardisiert. Beispielsweise handelt es sich beim Bewegungsvektor BV um ein standardisiertes Bus-Protokoll, insbesondere CAN-Bus-Protokoll. Da die Bewegungsvektoren BV standardisiert sind, kann die Steuereinrichtung 22 im autonomen Betriebszustand des Lastkraftwagens 10 auch die von der jeweiligen autonomen Bedieneinrichtung 23 generierten Bewegungsvektoren BV in Steuersignale umsetzen, die dann in entsprechender Weise vom Antriebsstrang 12 abgearbeitet werden.

Bei der ersten autonomen Bedieneinrichtung 23_{I} handelt es sich im Wesentlichen um eine Fernbedieneinrichtung 24, die ebenfalls mit geeigneten Bedienelementen 25 ausgestattet ist, die in entsprechender Weise den einzelnen Komponenten 14 bis 18 des Antriebsstrangs 12 zugeordnet sind. Die Fernbedieneinrichtung 24 ist vom Lastkraftwagen 10 entfernt angeordnet und ermöglicht dadurch den autonomen Betrieb des Lastkraftwagens 10, da hierzu kein Fahrzeugführer im Lastkraftwagen 10 erforderlich ist. Die Fernbedieneinrichtung 24 generiert aus den eingehenden Fahrwünschen FW wieder den standardisierten Bewegungsvektor BV und ist über eine Sender-Empfänger-Anordnung 26 an die Antriebsstrang-Schnittstelle 21 angeschlossen. Die Sender-Empfänger-Anordnung 26 umfasst dabei eine fahrzeugfeste Sender-Empfänger-Einheit 27, die an die Antriebsstrang-Schnittstelle 21 angeschlossen ist, sowie eine fahrzeugferne Sender-Empfänger-Einheit 28, die mit der Fernbedieneinrichtung 24 verbunden ist. Die Sender-Empfänger-Anordnung 26 arbeitet zweckmäßig drahtlos mittels elektromagnetischer Wellen. Dementsprechend wird zur Übertragung des Bewegungsvektors BV zwischen den Einheiten 27, 28 der Sender-Empfänger-Anordnung 26 dieser zunächst in ein Fernsteuersignal FS umgewandelt und nach der Fernübertragung wieder in den Bewegungsvektor BV reformiert.

Die Fernbedieneinrichtung 24 ist zusammen mit der fahrzeugfernen Sender-Empfänger-Einheit 28 beim erfindungsgemäßen Speditionshof 1 in der Fernbedienzentrale 9 angeordnet. Wie aus Fig. 1 entnehmbar ist, kann die Fernbedienzentrale 9 mehrere derartige Fernbedieneinrichtungen 24 bzw. mehrere derartige autonome Bedieneinrichtungen 23 aufweisen. Zweckmäßig sind dabei die Fernbedieneinrichtungen 24 der Fernbedienzentrale 9 mit einer gemeinsamen fahrzeugfernen Sender-Empfänger-Einheit 28 verbunden.

Entsprechend Fig. 2 kann die zweite autonome Bedieneinrichtung 23_{II} wenigstens eine Bahnberechnungseinrichtung 29 sowie wenigstens eine damit verbundene Lage- und Positionsbestimmungseinrichtung 30 aufweisen. Die Lage- und Positionsbestimmungseinrichtung 30 ist so gestaltet, dass sie z. B. die absolute Lage und Position des jeweiligen Lastkraftwagens 10 bestimmen kann. Unter "Position" wird hierbei der geographische Ort des Lastkraftwagens 10 verstanden, während "Lage" die Ausrichtung der Längsachse des Lastkraftwagens 10 bezüglich eines erdfesten Koordinatensystems, zweckmäßig die Himmelsrichtungen, angibt. Alternativ ist auch eine Ausführungsform möglich, bei welcher die Lage- und Positionsbestimmungseinrichtung 30 so gestaltet ist, dass sie nur die relative Lage und Position des Lastkraftwagens 10 mit Bezug auf die jeweils nächste anzufahrende Station des Speditionshofs 1 ermittelt. Die Lage- und Positionsbestimmungseinrichtung 30 kann die ermittelte Lage und Position der Bahnberechnungseinrichtung 29 übermitteln, die dann in Abhängigkeit der aktuellen Lage und Position des Lastkraftwagens 10 fortlaufend aktualisierte Bewegungsvektoren BV, also eine Abfolge von Bewegungsvektoren BV generiert. Die von der Bahnberechnungseinrichtung 29 erzeugten Bewegungsvektoren BV führen den Lastkraftwagen 10 zur nächsten anzufahrenden Station des Speditionshofs 1, wenn sie vom Antriebsstrang 12 abgearbeitet werden.

Bei der hier gezeigten Ausführungsform ist die Bahnberechnungseinrichtung 29 fest im Lastkraftwagen 10 installiert. Bei einer anderen Ausführungsform kann es vorgesehen sein, die Bahnberechnungseinrichtung 29 außerhalb des Lastkraftwagens anzuordnen, insbesondere in der Fernbedienzentrale 9 des Speditionshofs 1. Die vom Lastkraftwagen 10 entfernte Bahnberechnungseinrichtung 29 kann dann wieder über eine Sender-Empfänger-Anordnung mit der Antriebsstrang-Schnittstelle 21 kommunizieren.

Bei der hier gezeigten Architektur des Steuerungssystems 13 ist die Lage- und Positionsbestimmungseinrichtung 30 an die Bahnberechnungseinrichtung 29 direkt angeschlossen. Ebenso ist es möglich, dass Bahnberechnungseinrichtung 29 und Lageund Positionsbestimmungseinrichtung 30 beide an die Antriebsstrang-Schnittstelle 21 angeschlossen sind und über diese miteinander kommunizieren, wobei die Antriebsstrang-Schnittstelle 21 dann einen Sternpunkt bildet.

Die Lage- und Positionsbestimmungseinrichtung 30 ist hier ebenfalls fest im Lastkraftwagen 10 installiert. Alternativ kann es auch hier vorgesehen sein, die Lage- und Positionsbestimmungseinrichtung 30 - je nach Funktionsprinzip - auch außerhalb des Lastkraftwagens 10. anzuordnen, wobei auch hier zur Kommunikation mit der Antriebsstrang-Schnittstelle 21 eine Sender-Empfänger-Anordnung vorgesehen sein kann. Beispielsweise kann die Lage- und Positionsbestimmungseinrichtung 30 dann aus einer Sensorik bestehen, die mit einer Vielzahl von auf dem Gelände 2 des Speditionshofs 1 verteilten Sensoren arbeitet, die eine Lage- und Positionsbestimmung der auf dem Gelände 2 bewegten Lastkraftwagen 10 ermöglichen. Insbesondere kann die Sensorik nach dem Radar-Prinzip arbeiten.

Eine fahrzeugfeste Lage- und Positionsbestimmungseinrichtung 30 kann beispielsweise mit einem Satelliten-Navigationsempfänger 31 arbeiten, der am Lastkraftwagen 10 angebracht ist. Beim Satelliten-Navigationsempfänger 31 handelt es sich zweckmäßig um einen GPS-Empfänger. Eine höhere Genauigkeit für die Positionsbestimmung kann mit Hilfe eines DGPS-Empfängers (differentieller GPS-Empfänger) erreicht werden, der mit einer terrestrischen DGPS-Referenzstation 32 zusammenarbeitet, die gemäß Fig. 1 zweckmäßig am Speditionshof 1 angeordnet ist. Für die Lagebestimmung des Lastkraftwagens 10 kann dieser mit zumindest einem auslesbaren Kompass ausgestattet sein. Die Funktionsweise einer derartigen Lage- und Positionsbestimmungseinrichtung 30 ist in der DE 100 31 244 A1 näher erläutert, so dass diesbezüglich auf diese Druckschrift verwiesen werden kann, deren Inhalt hiermit durch ausdrückliche Bezugnahme in den Offenbarungsgehalt der vorliegenden Erfindung aufgenommen wird.

Bei einer alternativen Ausführungsform kann die Lage- und Positionsbestimmungseinrichtung 30 eine Bilderkennungseinrichtung 33 aufweisen, die mit wenigstens einer Kamera 34 arbeitet. Mit Hilfe der Kameras 34 werden Kamerabilder erzeugt, die dann mit gespeicherten Bildern des Speditionshofs 1 verglichen werden. Aus diesem Vergleich können dann die aktuelle Lage und Position des Lastkraftwagens 10 innerhalb des Speditionshofs 1 bestimmt werden. Dabei können die Bilderkennungseinrichtung 33 und/oder die Kameras 34 wie hier am Lastkraftwagen 10 angebracht sein. Ebenso ist es möglich, eine derartige Bilderkennungseinrichtung 33 mit Kameras 34 stationär am Speditionshof 1 anzuordnen, z. B. in der Fernbedienzentrale 9.

Bei einer anderen Alternative kann die Lage- und Positionsbestimmungseinrichtung 30 eine Spurerkennungseinrichtung 35 aufweisen, die ebenfalls mit wenigstens einer Kamera 36 arbeitet. Die Spurerkennungseinrichtung 35 sowie deren Kameras 36 sind fest am Lastkraftwagen 10 installiert und arbeiten mit Fahrbahnmarkierungen zusammen, die im Wesentlichen den in Fig. 1 gezeigten Spurlinien 37 entsprechen können. Die Spurerkennungseinrichtung 35 kann die Fahrbahnmarkierungen erkennen und - wenn mehrere verschiedene Fahrbahnmarkierungen vorgesehen sind - gegebenenfalls voneinander unterscheiden. Auf Basis dieser Fahrbahnmarkierungen kann die Spurerkennungseinrichtung 35 die aktuelle Lage und Position des Lastkraftwagens 10 ermitteln, derart, dass die Bahnberechnungseinrichtung 29 Bewegungsvektoren BV berechnen kann, die bei ihrer Abarbeitung im Antriebsstrang 12 dazu führen, dass der jeweilige Lastkraftwagen 10 der jeweiligen Fahrbahnmarkierung folgt und so von einer Station zur nächsten gelangt.

Bei der Bestimmung der Bewegungsvektoren BV kann die Bahnberechnungseinrichtung 29 zweckmäßig Umgebungsbedingungen im Umfeld des jeweiligen Lastkraftwagens 10 berücksichtigen. Auf diese Weise können Kollisionen des Lastkraftwagens 10 mit einem Hindernis vermieden werden. Beispielsweise können diese Umgebungsbedingungen der Bahnberechnungseinrichtung 29 in gespeicherter Form zur Verfügung gestellt werden. In einem entsprechenden Speicher sind dann die Umgebungsbedingungen eines oder mehrerer Speditionshöfe 1 abgespeichert, so dass die Bahnberechnungseinrichtung 29 bei Kenntnis der aktuellen Lage und Position des Lastkraftwagens 10 die stationären und bekannten Hindernisse des jeweiligen Speditionshofs 1 sicher umfahren kann. Dabei ist es zweckmäßig, die Bahnberechnungseinrichtung 29 zusätzlich mit einer Sensorik 41 auszustatten, die mehrere Sensoren 38 umfasst. Mit Hilfe der Sensorik 41 können kritische Abstände zwischen Lastkraftwagen 10 und Hindernissen ermittelt und bei der Berechnung der Bewegungsvektoren BV berücksichtigt werden. Dabei ist es grundsätzlich möglich, derartige Abstandssensoren 38 direkt am Lastkraftwagen 10 anzubringen. Alternativ können die Abstandssensoren 38 auch an kritischen Stellen des Speditionshofs 1 angebracht sein, was insbesondere dann von Vorteil ist, wenn die Bahnberechnungseinrichtung 29 ohnehin am Speditionshof 1 angebracht ist. Ebenso ist es möglich, dass die am Speditionshof 1 angebrachten Sensoren 38 über eine entsprechende Sender-Empfänger-Anordnung mit der fahrzeugfest angebrachten Bahnberechnungseinrichtung 29 kommunizieren, z. B. wieder über die Antriebsstrang-Schnittstelle 21.

Des Weiteren ist es zweckmäßig, wenn die Bahnberechnungseinrichtung 29 bei der Bestimmung des Bewegungsvektors BV die Fahrzeugdynamik berücksichtigt, um ein Umkippen des Fahrzeugs 10 zu vermeiden. Ebenso sollte die Fahrzeuggeschwindigkeit auf einen relativ kleinen Wert, z.B. Schrittgeschwindigkeit, begrenzt sein, um die Gefahr von Schäden möglichst klein zu halten.

Der erfindungsgemäße automatisierte Speditionshof 1 arbeitet wie folgt:

Der Fahrzeugführer steuert den Lastkraftwagen 10 beladen mit einer "alten" Nutzlast den Speditionshof 1 als Zielort für die alte Nutzlast manuell an und nutzt dazu die fahrzeugfeste manuelle Bedieneinrichtung 19 (Fig. 2). Der Fahrzeugführer überführt den Lastkraftwagen 10 manuell zur Abgabestation 3. Dort folgt die Übergabe des Lastkraftwagens 10 vom Fahrzeugführer an den Speditionshof 1. Hierbei werden Fahrzeugdaten manuell oder über einen geeigneten Datenträger oder telemetrisch an einen Kontrollrechner 39 des Speditionshofs 1 übertragen. Diese Fahrzeugdaten enthalten insbesondere einen Fahrzeug-Identifikationscode sowie einen Nutzlast-Identifikationscode. Nachdem der Fahrzeugführer seinen Lastkraftwagen 10 an den Speditionshof 1 übergeben hat, erfolgt zwischen den einzelnen Stationen des Speditionshofs 1 in der Regel nur noch ein autonomer Fahrbetrieb des Lastkraftwagens 10. Zuerst wird der Lastkraftwagen 10 autonom von der Abgabestation 3 zur Entladestation 4 überführt. Dort wird anhand des Nutzlast-Identifikationscodes die Entladung des Lastkraftwagens 10, vorzugsweise automatisiert, durchgeführt. In der Regel handelt es sich bei der Nutzlast des Lastkraftwagens 10 um einen oder mehrere Container, die besonders einfach entladen werden können.

Nach dem Entladen des Lastkraftwagens 10 wird dieser autonom zur Wartungsstation 5 überführt. Dabei kann es vorgesehen sein, den Lastkraftwagen 10 - je nach Bedarf - vor der Wartungsstation 5 noch der Waschstation 8 und/oder der Tankstation 40 zuzuführen. Die Notwendigkeit einer Betankung und einer Fahrzeugwaschung können bereits bei der Abgabe des Lastkraftwagens 10 mit in die Fahrzeugdaten einfließen. Dementsprechend erfolgen auch die Waschung und die Betankung des Fahrzeugs 10 in Abhängigkeit der Fahrzeugdaten. Das Entladen des Lastkraftwagens 10 erfolgt somit in Abhängigkeit der Fahrzeugdaten, welche Daten über die alte Nutzlast umfassen.

Zweckmäßig arbeitet die Waschanlage 8 vollautomatisch. Ebenso kann die Tankstation 40 mehr oder weniger automatisiert sein.

In der Wartungsstation 5 erfolgt eine routinemäßige Inspektion des Lastkraftwagens 10, insbesondere um Verschleißteile zu prüfen. Dabei können unterschiedliche elektronische Diagnosesysteme zur Anwendung kommen, um den jeweiligen Wartungsbedarf des Lastkraftwagens 10 zu ermitteln. Insbesondere kann vorgesehen sein, dass zur Ermittlung des Wartungsbedarfs ein automatischer und telemetrischer Datenaustausch zwischen der Wartungsstation 5 und dem jeweiligen Lastkraftwagen 10 erfolgt. Dementsprechend wird auch die Wartung in Abhängigkeit der Fahrzeugdaten durchgeführt. Soweit wie möglich, wird auch bei der Wartungsstation 5 eine Automatisierung der Wartung durchgeführt.

Nach der Wartung wird der Lastkraftwagen 10 der Beladestation 6 zugeführt, die in Abhängigkeit des jeweiligen Lastkraftwagens 10 diesen mit einer "neuen" Nutzlast versieht. Auch die Beladestation 6 arbeitet weitgehend automatisiert. Nach der Beladung ist der Lastkraftwagen 10 bereit für eine neue Tour zu einem neuen Zielort und wird zunächst autonom von der Beladestation 6 zur Abgabestation 7 überführt. Dort kann der bereitgestellte Lastkraftwagen 10 wieder vom ursprünglichen

Fahrzeugführer oder von einem anderen Fahrzeugführer übernommen werden und manuell weggefahren werden.

Durch die Verwendung von autonomen Bedieneinrichtungen 23, die es ermöglichen, die Lastkraftwagen 10 aus der Ferne, insbesondere von der Fernsteuerzentrale 9 aus, zu steuern, ist es möglich, mit einem minimalen Personalbedarf eine relativ große Anzahl von Lastkraftwagen 10 gleichzeitig zu kontrollieren und ordnungsgemäß abzufertigen. Die Gefahr von Beschädigungen der Lastkraftwagen 10 oder der Gebäude des Speditionshofs 1 sowie die Verletzungsgefahr von Fahrzeugführern und Einweisern und anderem Hilfspersonal wird dadurch erheblich reduziert.

Wie erläutert, fertigen die einzelnen Stationen des Speditionshofs 1 die jeweiligen Lastkraftwagen 10 stets in Abhängigkeit der zugehörigen Fahrzeugdaten ab, wodurch eine fahrzeugspezifische Abfertigung erfolgt. Insbesondere erkennen die Be- und Entladestationen 4, 6 anhand der Fahrzeugdaten die Nutzlastgröße und die Reichweite des jeweiligen Lastkraftwagens. Die einzelnen Stationen sind zu diesem Zweck mit dem Kontrollrechner 39 vernetzt.

Der Kontrollrechner 39 bildet eine koordinierende Zentralstelle des erfindungsgemäßen Speditionshofs 1. Er steuert, z. B. über Funk, den jeweiligen Lastkraftwagen 10 an, kann der automatisierten Waschstation 8 und der automatisierten Tankstation 40 alle erforderlichen Kommandos geben und verwaltet in der Beladestation 4 und der Entladestation 6 den Containerumschlag.

Bei der automatisiert arbeitenden Waschstation 8 kann es sich um eine standardmäßige Waschanlage handeln, die auch konventionell manuell durchfahren werden kann. Die Signale, die als Kommandos über eine Ampel beim manuellen Durchfahren an den jeweiligen Fahrzeugführer gegeben werden, wie z. B. Start, Stopp und Fahrgeschwindigkeit, werden beim autonomen Betrieb über ein Feldbussystem an den Kontrollrechner 39 weitergeleitet. Dieser führt beim autonomen Betrieb dann den Lastkraftwagen 10 anstelle des Fahrzeugführers durch die Waschstation 8.

In der automatisiert ausgestatteten Tankstation 40 kann der jeweilige Lastkraftwagen 10 beispielsweise von einem Roboter betankt werden. Ein solcher Roboter kann vom Kontrollrechner 39 durch einfache Kommandos angesteuert werden, wie z. B. "Lastkraftwagen vorhanden" und "Volltanken". Die Tankstation 40 meldet dem Leitrechner 39 z. B. die getankte Menge Kraftstoff zurück.

Der autonom fahrbare Lastkraftwagen 10 empfängt z. B. über die fahrzeugfeste Sender-Empfänger-Einheit 27 die jeweiligen Befehle (Bewegungsvektoren BV) vom Kontrollrechner 39 und kann außerdem darüber dem Kontrollrechner 39 Informationen über den aktuellen Fahrzeugzustand (z.B. Geschwindigkeit und Position) geben. Die jeweils verwendete autonome Bedieneinrichtung 23 berechnet aus den eingehenden Daten, die den jeweiligen Fahrwunsch FW repräsentieren, und aus der insbesondere vom GPS-Empfänger 31 gelieferten Fahrzeugposition und Fahrzeuglage den jeweils erforderlichen Bewegungsvektor BV. Dieser wird dem Antriebsstrang 12 über die Antriebsstrang-Schnittstelle 21 und der Steuereinrichtung 22 übergeben.

Bei einer speziellen Ausführungsform kann vorzugsweise bei einem Gespann 10 zwischen der durch die jeweilige Bedieneinrichtung 19 oder 23 gebildeten Vorgabeebene und der durch die Steuereinrichtung 22 gebildeten Ausführungsebene eine Rückfahreinrichtung geschaltet werden, die bei Rückwärtsfahrt des Lastkraftwagens 10 den Bewegungsvektor BV in seiner Art so modifiziert, dass der Lastkraftwagen 10 die gewünschte Bahn rückwärts durchfährt, ohne dass das Gespann 10 einknickt.

Die zur Betätigung des Antriebsstrangs 12 vorgesehene Steuereinrichtung 22 führt zur Umsetzung des Fahrwunsches FW, indem die Bewegungsvektoren BV abgearbeitet werden. Darüber hinaus kann diese Steuereinrichtung 22 auch eine hier nicht gezeigte Container-Steuerungseinrichtung ansteuern, mit der beispielsweise Stützen des Containers automatisch aus- und eingefahren werden können. Eine derartige Container-Steuerungseinrichtung ist beispielsweise in der DE 195 26 702 C2 beschrieben, deren Inhalt hiermit durch ausdrückliche Bezugnahme zum Offenbarungsgehalt der vorliegenden Erfindung hinzugeführt wird.

## Patentansprüche

1. Automatisierter Speditions-, Betriebshof oder Logistikzentrum für autonom fahrbare Verkehrsmittel (10),
- mit einer Abgabestation (3), die zur Übergabe eines von einem Fahrzeugführer manuell zur Abgabestation (3) überführten Verkehrsmittels (10) an den Speditionshof (1) dient, bei der Fahrzeugdaten an einen Kontrollrechner (39) des Speditionshofs (1) übermittelt werden und von der aus das Verkehrsmittel (10) autonom zur nächsten Station überführt wird,
- mit einer Entladestation (4), die zum Entladen des dahin überführten Verkehrsmittels (10) in Abhängigkeit der Fahrzeugdaten dient und von der aus der Verkehrsmittel (10) autonom zur nächsten Station überführt wird,
- mit einer Wartungsstation (5), die zur Wartung des dahin überführten Verkehrsmittels (10) in Abhängigkeit der Fahrzeugdaten dient und von der aus das Verkehrsmittel (10) autonom zur nächsten Station überführt wird,
- mit einer Beladestation (6), die zum Beladen des dahin überführten Verkehrsmittels (10) in Abhängigkeit der Fahrzeugdaten dient und von der aus das Verkehrsmittel (10) autonom zur nächsten Station überführt wird,
- mit einer Abholstation (7), die zur Übergabe des dahin überführten Verkehrsmittels (10) an den Fahrzeugführer in Abhängigkeit der Fahrzeugdaten dient und von der aus das Verkehrsmittel (10) vom Fahrzeugführer manuell weggefahren wird.

2. Speditionshof nach Anspruch 1,
**dadurch gekennzeichnet,**
- **dass** der Speditionshof (1) außerdem eine Tankstation (40) aufweist, die zum Betanken des dahin überführten Verkehrsmittels (10) dient und von der aus das Verkehrsmittel (10) autonom zur nächsten Station überführt wird, und/oder
- **dass** der Speditionshof (1) außerdem eine Waschstation (8) aufweist, die zum Waschen des dahin überführten Verkehrsmittels (10) dient und von der aus das Verkehrsmittel (10) autonom zur nächsten Station überführt wird.

3. Speditionshof nach Anspruch 1 oder 2,
**dadurch gekennzeichnet,**
- **dass** die Tankstation (40) zum automatischen Betanken des dahin überführten Verkehrsmittels 10 ausgebildet ist, und/oder
- die Waschstation (8) zum automatischen Waschen des dahin überführten Verkehrsmittels (10) ausgebildet ist, und/oder
- **dass** die Entladestation (4) zum automatischen Entladen des dahin überführten Verkehrsmittels (10) ausgebildet ist, und/oder
- **dass** die Beladestation (6) zum automatischen Beladen des dahin überführten Verkehrsmittels (10) ausgebildet ist.

4. Speditionshof (1) nach einem der Ansprüche 1 bis 3,
**dadurch gekennzeichnet,**
**dass** die Wartungsstation (5) und das Verkehrsmittel (10) für einen automatischen und telemetrischen Datenaustausch zur Ermittlung des Wartungsbedarfs des jeweiligen Verkehrsmittels (10) ausgebildet sind.

5. Speditionshof (1) nach einem der Ansprüche 1 bis 4,
**dadurch gekennzeichnet,**
- **dass** ein für den Speditionshof (1) geeignetes Verkehrsmittel (10) mit einem elektronisch ansteuerbaren Antriebsstrang (12), der wenigstens ein Antriebsaggregat (14), eine Lenkungsanlage (16) und eine Bremsanlage (17) umfasst, sowie mit einem Steuerungssystem (13) ausgestattet ist,
- **dass** das Steuerungssystem (13) eine fest am Verkehrsmittel (10) installierte manuelle Bedieneinrichtung (19) aufweist, über die vom Fahrzeugführer für den manuellen Betrieb des Verkehrsmittels (10) ein Fahrwunsch (FW) eingebbar ist und die aus dem Fahrwunsch (FW) einen standardisierten Bewegungsvektor (BV) generiert,
- **dass** das Steuerungssystem (13) wenigstens eine autonome Bedieneinrichtung (23) aufweist, über die für den autonomen Betrieb des Verkehrsmittels (10) ein Fahrwunsch (FW) eingebbar ist und die aus dem Fahrwunsch (FW) einen standardisierten Bewegungsvektor (BV) generiert,
- **dass** das Steuerungssystem (13) eine Steuereinrichtung (22) aufweist, die aus eingangsseitigen Bewegungsvektoren (BV) ausgangsseitig Steuersignale (SS) generiert und die zur Übertragung der Steuersignale (SS) an den Antriebsstrang (12) ausgebildet ist, der die Steuersignale (SS) zur Umsetzung des Fahrwunsches (FW) abarbeitet,
- **dass** das Steuerungssystem (13) eine Antriebsstrang-Schnittstelle (21) aufweist, über welche die manuelle Bedieneinrichtung (19) und die wenigstens eine autonome Bedieneinrichtung (23) mit der Steuereinrichtung (22) zur Übertragung der Bewegungsvektoren (BV) gekoppelt sind.

6. Speditionshof (1) nach Anspruch 5,
**dadurch gekennzeichnet,**
**dass** die autonome Bedieneinrichtung (23) als vom Verkehrsmittel (10) entfernte Fernbedieneinrichtung (24) ausgebildet ist, die in einer Fernbedienzentrale (9) des Speditionshofs (1) angeordnet ist und über eine Sender-Empfänger-Anordnung (26) an die Antriebsstrang-Schnittstelle (21) des Verkehrsmittels (10) angeschlossen ist.

7. Speditionshof (1) nach Anspruch 6,
**dadurch gekennzeichnet,**
**dass** die Fernbedienzentrale (9) zum simultanen Fernsteuern mehrerer Verkehrsmittel (10) ausgebildet ist.

8. Speditionshof (1) nach einem der Ansprüche 5 bis 7,
**dadurch gekennzeichnet,**
- **dass** die autonome Bedieneinrichtung (23) wenigstens eine Bahnberechnungseinrichtung (29) und wenigstens eine damit verbundene Lage- und Positionsbestimmungseinrichtung (30) aufweist,
- **dass** die Lage- und Positionsbestimmungseinrichtung (30) zum Bestimmen der absoluten Lage und Position des Verkehrsmittels (10) und/oder zum Bestimmen der relativen Lage und Position des Verkehrsmittels (10) mit Bezug auf den Speditionshof (1) oder auf die nächste anzufahrende Station ausgebildet ist,
- **dass** die Bahnberechnungseinrichtung (29) in Abhängigkeit der Lage und Position des Verkehrsmittels (10) eine Abfolge von Bewegungsvektoren (BV) generiert, die das Verkehrsmittel (10) zur nächsten anzufahrenden Station führen, wenn sie vom Antriebsstrang (12) abgearbeitet werden.

9. Speditionshof (1) nach Anspruch 8,
**dadurch gekennzeichnet,**
- **dass** die Bahnberechnungseinrichtung (29) im Verkehrsmittel (10) fest installiert ist, und/oder
- **dass** die Bahnberechnungseinrichtung (29) außerhalb des Verkehrsmittels (10) in einer Fernbedienzentrale (9) des Speditionshofs (1) angeordnet ist und über eine Sender-Empfänger-Anordnung (26) an die Antriebsstrang-Schnittstelle (21) des Verkehrsmittels (10) angeschlossen ist.

10. Speditionshof (1) nach Anspruch 8 oder 9,
**dadurch gekennzeichnet,**
- **dass** Lage- und Positionsbestimmungseinrichtung (30) im Verkehrsmittel (10) fest installiert ist, und/oder
- **dass** die Lage- und Positionsbestimmungseinrichtung (30) außerhalb des Verkehrsmittels (10) angeordnet ist und über eine Sender-Empfänger-Anordnung (26) an die Antriebsstrang-Schnittstelle (21) angeschlossen ist.

11. Speditionshof (1) nach Anspruch 10,
**dadurch gekennzeichnet,**
**dass** die Lage- und Positionsbestimmungseinrichtung (30) einen GPS-Empfänger oder einen DGPS-Empfänger (31) mit einer im oder am Speditionshof (1) angeordneten DGPS-Referenzstation (32) aufweist.

12. Speditionshof (1) nach Anspruch 10,
**dadurch gekennzeichnet,**
**dass** die Lage- und Positionsbestimmungseinrichtung (30) eine Bilderkennungseinrichtung (33) mit wenigstens einer Kamera (34) aufweist, die Kamerabilder mit gespeicherten Bildern des Speditionshofs (1) vergleicht und dadurch die aktuelle Lage und Position des Verkehrsmittels (10) bestimmt.

13. Speditionshof (1) nach Anspruch 10,
**dadurch gekennzeichnet,**
**dass** die Lage- und Positionsbestimmungseinrichtung (30) eine Spurerkennungseinrichtung (35) mit wenigstens einer Kamera (36) aufweist, die eine im oder am Speditionshof (1) angeordnete Fahrbahnmarkierung erkennt und dadurch die aktuelle Lage und Position des Verkehrsmittels (10) bestimmt.

14. Speditionshof (1) nach einem der Ansprüche 8 bis 13,
**dadurch gekennzeichnet,**
**dass** die Bahnberechnungseinrichtung (29) die aufeinander folgenden Bewegungsvektoren (BV) in Abhängigkeit von Umgebungsbedingungen im Umfeld des Verkehrsmittels (10) berechnet, die in gespeicherter Form der Bahnberechnungseinrichtung (29) zur Verfügung stehen und/oder mittels einer geeigneten Sensorik (41) ermittelt werden.
